# EUROPÄISCHE PATENTSCHRIFT

(11) **EP 2 128 483 B1**
(45) Veröffentlichungstag und Bekanntmachung des Hinweises auf die Patenterteilung: **18.01.2012**
(21) Anmeldenummer: 09007044.2
(22) Anmeldetag: 27.05.2009
(51) Int. Cl.: F16F 9/512

(54) **Bewegungsabhängige Dämpfung**
Motion-dependent dampening
Amortissement dépendant du mouvement

(30) Priorität: 27.05.2008 DE 102008025482
(43) Veröffentlichungstag der Anmeldung: 02.12.2009
(73) Patentinhaber: Rheinmetall Landsysteme GmbH, 24107 Kiel (DE)
(72) Erfinder: Eckhoff, Detlev, 24238 Selent (DE)
(74) Vertreter: Dietrich, Barbara

(56) Entgegenhaltungen:
- DE-B- 1 093 145

## Beschreibung

Ein hydraulischer Schwingungsdämpfer ist aus der DE-PS 1 148 112 bekannt. Dieser weist einen In einen in einem Zylinder verschiebbar geführten Kolben auf, der seinerselts Durchflusskanäle für die Flüssigkeit besitzt, deren Querschnitt temperaturabhängig gesteuert wird durch ein mit Fluid hoher Wärmedehnung gefülltes Wärmedehnungselement mit einer beweglichen Wand.

Die DE 103 28 541 A1 beschreibt ein Hydrop-Element und die Verwendung in einem Fahrzeug mit Laufwerk und Laufwerksrollen. Dieses Element zeichnet sich dadurch aus, dass es eine Vorwärmeinrichtung besitzt, wodurch vor dem Fahrbetrieb mittels dem Hydrop-Element die Kettenspannung entsprechend eingestellt werden kann, so dass auf einen hydraulischen Kettenspanner verzichtet werden kann.

Ein weiteres Hydrop-Element ist der DE 203 20 585 U1 entnehmbar. Des hydropneumatische Element besteht unter anderem aus einem hydropneumatischen Federelement mit einem Feder- und Dämpfungselement, aufweisend einen Hydraulikzylinder, einen Hauptkolben, einen Trennkolben sowie ein Dämpfungselement, welches zwischen dem Hauptkolben und dem Trennkolben platziert Ist. Am Hauptkolben ist stirnseitig zum Dämpfungselement weisend eine Düsennadel angebracht, die in eine vergrößerte Düsenbohrung des Dämpfungselements federwegabhängig eingreift, wodurch zusätzlich zu einer von der Einfederungsgeschwindigkeit abhängigen Dämpfung eine vom Einfederungsweg abhängige Dämpfung erfolgt, welche die von der Einfederungegeschwindigkeit abhängige Dämpfung reduziert.

Letztgenannte Dämpfungselemente bei Kettenfahrzeugen Jeder Art reagieren als so genannte wegabhängige Dämpfer. Dabei wird eine Dämpfung nur oberhalb einer statischen Lage realisiert, nicht jedoch eine ausreichende Dämpfung auf der so genannten Sinuswellenbahn (Versuchsbahn mit definierter Gestaltung). Zudem ist eine aufwendige Mechanik und Justage notwendig. Andere fungieren als feststehende Drossel.

Ein weiteres praktisches Problem besteht darin, dass bei Dauerbelastung der Hydrop-Elemente eine ausgeglichene Wärmebilanz nicht gewährleistet wird. Die Elemente können dann die zulässige Bauteiltemperatur überschreiten und kommen unterhalb der Grenztemperatur nicht in Temperatur-Beharrung. Durch die feststehende Dämpfungsblende tritt eine Dämpfung auch bei kleineren Hüben mit hohem prozentualen Bewegungsanteil ein.

Aus der DE 1 093 145 B ist eine Federung mit Stoßdämpfer bekannt. Dabei sind ein mit entgegengesetzt wirkenden Dämpfungsventilen versehene Kolben als Flugkolben und die Anschläge verstellbar und / oder federnd ausgebildet. In einer Ölsäule ist ein als Kolben ausgebildeter Stoßdämpfer eingeschaltet, der sich zwischen zwei starren, verstellbaren Anschlägen bewegen kann. In den Stoßdämpferkolben sind zwei Ventile eingebaut. Wenn durch einen Radausschlag die Schwinge und damit der Kolben nach oben bewegt werden, schiebt die Ölsäule den Stoßdämpferkolben vor sich her, ohne dass sich das Ventil öffnet. Erst wenn der Kolben an dem Anschlag anliegt und damit dessen Weiterbewegung begrenzt ist, öffnet sich das Ventil. Bei der Abwärtsbewegung der Schwinge wird der Stoßdämpferkolben durch Ausdehnung des Gasvolumens in den Raum ohne stoßdämpfende Wirkung nach unten geschoben bis zum Anschlag. Erst in diesem Augenblick beginnt die Dämpfungswirkung. Kleinere Schwingungen werden somit ungedämpft auf die Federung übertragen. Die Größe der ungedämpften Schwingungen kann durch die Verstellung der Anschläge vorgegeben werden.

Aufbauend auf diese Idee der Ausblendung kleinerer Hübe stellt sich die Erfindung die Aufgabe, eine einfachere Konstruktion aufzuzeigen.

Gelöst wird die Aufgabe durch die Merkmale des Patentanspruchs 1.

Der Erfindung liegt die Idee zugrunde, die Dämpfung nicht wegabhängig sondern bewegungsabhängig zu gestalten. Dazu werden so genannte Tothübe eingestellt bzw. die Dämpfungen ausgesetzt. Das bietet die Möglichkeit der Erhöhung der Maximaldämpfungskraft bei einem reduzierten Wärmeeintrag, bedingt durch das Ausblenden der insbesondere kleinen und häufigen Hübe.

Ein beidseitiger Tothub aus der Startposition der Dämpfungsbewegung bzw. der statischen Lage (Mittelposition) wird beispielsweise beim Überfahren von Kopfsteinpflaster eingestellt. Damit wird eine Reduzierung des Wärmeeintrages erreicht. Dadurch ist es möglich, kleinere Hübe beidseitig auszublenden.

Beim Überfahren einer Sinuswellenbahn wird die Dämpfung bekanntlich so früh wie möglich benötigt. Aus der Position "Voll ausgefedert" wird daher vorzugsweise der einseitige Tothub bei dem Beginn der Einfederung in seiner Dämpfung ausgesetzt (reduziert), so dass je nachdem, wo der Stillstand des Systems liegt, (ganz ausgefedert - einseitiges Totband), mit Bewegungsbeginn ein einseitiger Tothub eingestellt wird.

Vorteilhaft ist des Weiteren, dass nunmehr keine aufwändigen Justage im Vergleich zu einem Konzept mit wegabhängigen Dämpfung notwendig, da ein selbsttätige Rückstellung des Dämpfungskolbens bei Druckausgleich und Richtungswechsel erfolgt.

Anhand von Zeichnungen und einem Ausführungebeispiel soll die Erfindung näher erläutert werden. Es zeigt:
- Fig. 1: eine Darstellung eines Hydrop-Elementes voll ausgefedert,
- Fig. 2: eine graphische Darstellung einer einseitigen Tothubeinstellung,
- Fig. 3: eine graphische Darstellung einer beldseitigen Tothubeinetellung.

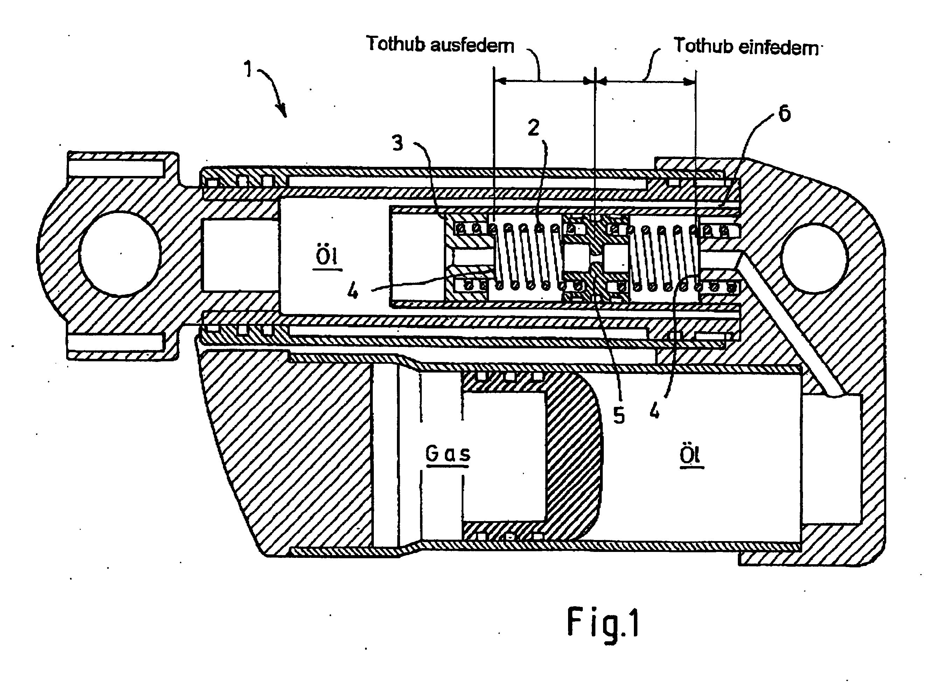

In Fig. 1 ist ein Hydrop-Element 1 dargestellt, mit einer Druckfeder 2, einer Einstellschraube 3, einem Anschlag 4 einer Dämpfungseinheit 6 und einem Dämpfungskolben 5 mit hydraulischer Blende, Diese Dämpfungseinhelt 6 kann notfalls in herkömmliche Elemente nachgerüstet bzw. neu integriert werden.

Die Funktionsweise ist wie folgt:

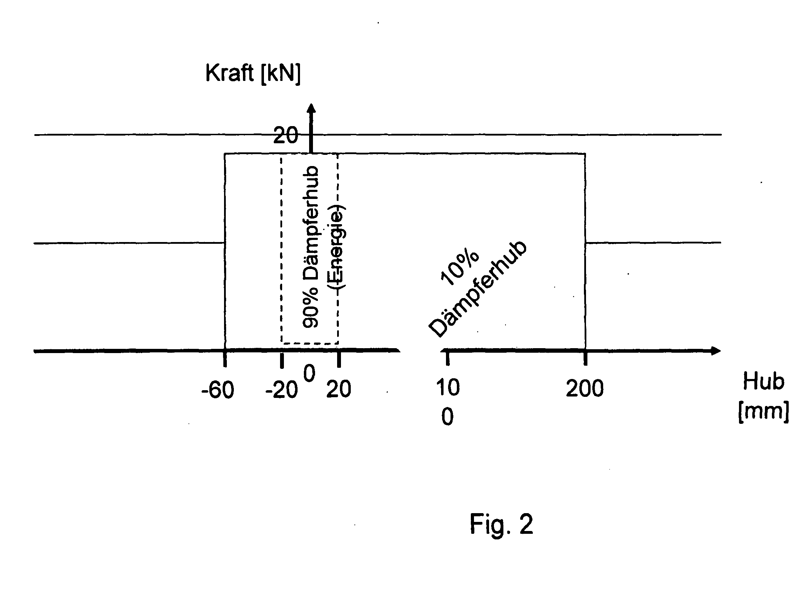

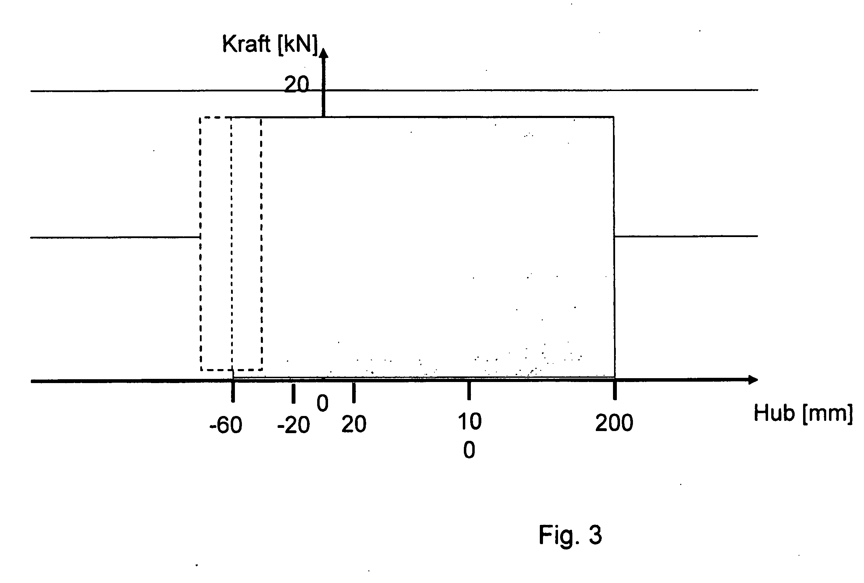

Ober die Einstellschraube 3 und die Druckfeder 2 werden die Tothübe bzw. der Tothub eingesteilt (Fig. 2, Fig. 3).

Beim Einfedern entsteht ein Staudruck vor der Blende eines Dämpfungskolbens 5, so dass die Dämpfung ausgesetzt wird. Ist der Federweg größer als der eingestellte Tothub, verfährt der Dämpfungskolben 5 gegen einen festen Anschlag 4, so dass, wenn der Kolben 5 sich an den Anschlag 4 gelegt hat, das zu verdrängende Ölvolumen ausschließlich durch die Drosselblende gepresst werden muss und damit die Dämpfung erzeugt. Bei einem Druckausgleich vor und hinter der Blende erfolgt die Rückstellung des Dämpfungskolbens 5 in die Mittenposition mit Hilfe der Rückstellfedern. Gleiches gilt für das Ausfedern.

## Patentansprüche

1. Hydrop-Elemente (1) mit einem Dämpfungskolben (5) mit hydraulischer Blende, aufweisend eine Dämpfungseinheit (6) mit einer Druckfeder (2), einer Einstellschraube (3) sowie einen Anschlag (4), wobei durch die Druckfeder (2) und die Einstellschraube (3) ein beidseitiger Tothub aus der Startposition der Dämpfungsbewegung oder statischen Lage, d.h., der Mittelposition eingestellt wird, sodass kleinere Hübe beidseitig ausgeblendet werden.

2. Hydrop-Elemente nach Anspruch 1, **dadurch gekennzeichnet, dass** Rückstellfedern für die Rückstellung des Dämpfungsklobens (5) in die Mittelposition eingebunden sind.

3. Hydrop-Elemente nach Anspruch 1 oder 2, **dadurch gekennzeichnet, dass** die Dämpfungseinheit (6) in das Hydrop-Element (1) nachrüstbar ist oder neu integriert werden kann.

## Claims

1. Hydrop elements (1) comprising a damping piston (5) with hydraulic aperture, having a damping unit (6) with a compression spring (2), an adjusting screw (3) and a stop (4), wherein the compression spring (2) and the adjusting screw (3) are used to set a dead travel on both sides from the start position of the damping movement or static location, i.e. the centre position, such that smaller travels are absorbed on both sides.

2. Hydrop elements according to Claim 1, **characterized in that** return springs for returning the damping piston (5) into the centre position are included.

3. Hydrop elements according to Claim 1 or 2, **characterized in that** the damping unit (6) can be retrofitted into the hydrop element (1) or can be newly integrated into the hydrop element (1).

## Revendications

1. Eléments hydropneumatiques (1) comprenant un piston d'amortissement (5) avec un diaphragme hydraulique, présentant une unité d'amortissement (6) avec un ressort de compression (2), une vis d'ajustement (3) ainsi qu'une butée (4), une course morte bilatérale étant ajustée à partir de la position de départ du mouvement d'amortissement, ou position statique, c'est-à-dire la position centrale, par le ressort de compression (2) et la vis d'ajustement (3), de sorte que des plus petites courses soient éliminées par le diaphragme des deux côtés.

2. Eléments hydropneumatiques selon la revendication 1, **caractérisés en ce que** des ressorts de rappel sont incorporés dans la position centrale pour le rappel du piston d'amortissement (5).

3. Eléments hydropneumatiques selon la revendication 1 ou 2, **caractérisés en ce que** l'unité d'amortissement (6) peut être installée en rattrapage dans l'élément hydropneumatique (1) ou peut être nouvellement intégrée.
